# EUROPÄISCHE PATENTSCHRIFT

(11) **EP 2 875 290 B1**
(45) Veröffentlichungstag und Bekanntmachung des Hinweises auf die Patenterteilung: **16.11.2016**
(21) Anmeldenummer: 13742189.7
(22) Anmeldetag: 18.07.2013
(51) Int. Cl.: F24F 3/153

(54) **FRISCHLUFTVERSORGUNGSEINRICHTUNG SOWIE VERFAHREN ZUR FRISCHLUFTVERSORGUNG EINER OFF-SHORE-ANLAGE**
FRESH AIR SUPPLY DEVICE AND METHOD FOR SUPPLYING FRESH AIR TO AN OFFSHORE FACILITY
DISPOSITIF D'ALIMENTATION EN AIR FRAIS ET PROCÉDÉ D'ALIMENTATION EN AIR FRAIS D'UNE INSTALLATION EN MER

(30) Priorität: 18.07.2012 DE 102012212619
(43) Veröffentlichungstag der Anmeldung: 27.05.2015
(73) Patentinhaber: Mahle International GmbH, 70376 Stuttgart (DE)
(72) Erfinder: REINHARDT, Alexander, 74626 Bretzfeld (DE)
(74) Vertreter: BRP Renaud & Partner mbB Rechtsanwälte Patentanwälte Steuerberater
(86) Internationale Anmeldenummer: PCT/EP2013/065201
(87) Internationale Veröffentlichungsnummer: WO 2014/013022

(56) Entgegenhaltungen:
- WO-A2-2008/092449
- DE-A1- 2 644 567
- DE-A1-102008 053 814
- DE-C1- 19 859 628
- US-A1- 2005 284 157

## Beschreibung

Die vorliegende Erfindung betrifft eine Off-Shore-Anlage, die mit einer Frischluftversorgungseinrichtung ausgestattet ist, gemäß dem Oberbegriff des Anspruchs 1. Ferner betrifft die vorliegende Erfindung ein Verfahren zur Frischluftversorgung einer Off-Shore-Anlage.

Problematisch bei Off-Shore-Anlagen ist die salzhaltige Umgebungsluft, die an Leckagestellen und auch an Dichtungen vorbei in einen Innenraum einer derartigen Anlage eindringen kann. Dadurch können sich in der Anlage salzhaltige und dadurch hygroskopische Ablagerungen bilden, die elektrisch leitend sind und stark korrosiv wirken. Insbesondere für elektrische Einrichtungen innerhalb der Off-Shore-Anlage sind derartige aggressive Ablagerungen unerwünscht. Typische Off-Shore-Anlagen sind Bohrinseln, Schiffe und Windkraftanlagen.

Aus der DE 198 59 628 C1 ist es für eine Windkraftanlage bekannt, eine Vorrichtung zur Vermeidung des Eindringens von korrosiv wirkenden Salzpartikeln in den Generator- und Getrieberaum der Windkraftanlage zu schaffen. Diese Vorrichtung weist hierzu einen Luft unter Überdruck in wenigstens einen im Wesentlichen geschlossen ausgeführten Teil des Generator- und Getrieberaums einbringenden Luftdruckerzeuger und eine dem Generator- und Getrieberaum in Strömungsrichtung vorgeschaltete Filtereinrichtung zur Abscheidung von Feuchtigkeit und Salzpartikeln aus der vom Luftdruckerzeuger in den Raum einzubringenden Luft auf. Die Filtereinrichtung kann dabei als Absetzeinrichtung, die mit langen, im Wesentlichen vertikalen Turminneren angeordneten Absetzschläuchen ausgestattet ist, oder als Wirbelkammer ausgestaltet sein. Somit umfasst die bekannte Off-Shore-Anlage einen Innenraum und eine Frischluftversorgungseinrichtung, die ihrerseits einen Einlass für salzhaltige und wasserhaltige Frischluft, einen Auslass für entsalzte und getrocknete Frischluft, und einen vom Einlass zum Auslass führenden Frischluftpfad aufweist, wobei der Einlass der Frischluftversorgungseinrichtung zur Umgebung der Off-Shore-Anlage offen ist, während der Auslass der Frischluftversorgungseinrichtung zum Innenraum der Off-Shore-Anlage offen ist.

Aus der DE 26 44 567 A1 ist eine Vorrichtung zum Entfeuchten und Entsalzen von Frischluft bekannt, die eine im Frischluftpfad angeordnete Kühleinrichtung zum Kühlen der Frischluft, einen im Frischluftpfad angeordneten Tropfenabscheider zum Entfernen von Salz und Wasser aus der Frischluft, eine im Frischluftpfad stromab des Tropfenabscheiders angeordnete Heizeinrichtung zum Erwärmen der Frischluft, und einen Wärmepumpenkreis aufweist, in den die Kühleinrichtung und die Heizeinrichtung eingebunden sind, derart, dass die Frischluft in der Kühleinrichtung als Wärmequelle dient und die Frischluft in der Heizeinrichtung als Wärmesenke dient.

Die vorliegende Erfindung beschäftigt sich mit dem Problem, für eine Off-Shore-Anlage einen Weg aufzuzeigen, der einen verbesserten Schutz der Anlage bzw. von Komponenten oder Einrichtungen der Anlage vor korrosiv wirkenden Salzpartikeln ermöglicht.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, die einem Innenraum der Off-Shore-Anlage zuzuführende salzhaltige und wasserhaltige Frischluft zunächst zu kühlen, um das Entfernen von Salz und Wasser durchzuführen. Durch das Abkühlen der Frischluft wird die bereits hohe relative Luftfeuchtigkeit erhöht, was auch zur Auskondensation von Wasser führt und damit die Abscheidung von sehr feinen salzhaltigen Aerosolen aus der Luft erheblich vereinfacht. Insbesondere wird durch die Abkühlen der Luft auch der Taupunkt unterschritten , wodurch die Abscheidung von Wasser über einfache Tropfenabscheider ermöglicht wird. Durch das Kühlen der Luft ist es ferner möglich, gleichzeitig Wasser und Salzpartikel in verstärktem Maße auszuscheiden. Nach dem Abscheiden der Tropfen kann die Luft wieder erwärmt und damit getrocknet werden. Beispielsweise können im Wasser gelöste Salze durch das Reduzieren der Feuchtigkeit in der Luft kristallisieren und dann treten dann in Form von Partikeln in der Luft auf. Derartige Partikel lassen sich vergleichsweise einfach, zum Beispiel mit einem Feinfilter, aus der Luft entfernen. Durch das Abkühlen der Frischluft für das Entfernen das Salze und für das Trocknen der Luft kann somit die Effizienz der Luftreinigung erheblich verbessert werden.

Durch das Abkühlen der Frischluft wird somit die im Tropfenabscheider anfallende Wassermenge signifikant vergrößert. Dies hat neben einer verbesserten Lufttrocknung zusätzlich den positiven Effekt, dass ebenfalls im Tropfenabscheider anfallende Salze besser ausgewaschen werden können. Salzanlagerungen können dabei gelöst und ausgespült werden. Ferner ist die Tendenz zur Salzanlagerung im Tropfenabscheider reduziert. Durch die Kühlung der Frischluft und die damit einhergehende verbesserte Trocknung kann somit die Gefahr einer Versalzung des Tropfenabscheiders erheblich reduziert werden.

Erfindungsgemäß wird ferner vorgeschlagen, die Frischluft nach dem Entsalzen und nach dem Trocknen zu erwärmen. Auch nach dem Trocknen verbleibt eine gewisse Restfeuchte in der Luft. Durch das Erwärmen der Luft wird die relative Feuchtigkeit der Luft signifikant reduziert, was den Trocknungsgrad der Frischluft entsprechend erhöht. Die letztlich dem Innenraum zugeführte erwärmte Frischluft kann vergleichsweise viel Feuchtigkeit aufnehmen und wirkt für den Innenraum trocknend.

Von besonderem Vorteil ist der erfindungsgemäße Vorschlag, die zum Erwärmen der Frischluft benötigte Wärme mittels eines Wärmepumpenkreises der Frischluft, nämlich beim Kühlen der Frischluft zu entziehen. Durch diese Maßnahme wird der energetische Wirkungsgrad des für die Frischluft vorgesehenen Reinigungsprozesses erheblich verbessert. Zum Kühlen der Frischluft muss dieser Wärme entzogen werden. Diese Wärme wird gemäß dieser Ausführungsform zum Erwärmen der getrockneten Frischluft genutzt. Der erforderliche Energiebedarf zum Kühlen und Erwärmen der Frischluft wird dadurch erheblich reduziert. Bemerkenswert ist hierbei, dass die wasserhaltige Luft beim Kühlen deutlich mehr Wärmeenergie abgibt als die getrocknete Luft anschließend zum Erwärmen benötigt. Somit ist es insbesondere möglich, die Luft nach dem Trocknen auf eine Temperatur zu erwärmen, die oberhalb der Umgebungstemperatur liegt. Hierdurch kann insbesondere eine vorbestimmte Raumtemperatur im Innenraum der Off-Shore-Anlage eingestellt werden.

Eine Frischluftversorgungseinrichtung, mit deren Hilfe das vorstehend beschriebene Verfahren in der erfindungsgemäßen Off-Shore-Anlage durchgeführt werden kann, umfasst einen Einlass für salzhaltige und wasserhaltige Frischluft, einen Auslass für entsalzte und getrocknete Frischluft und einen Frischluftpfad, der vom Einlass zum Auslass führt. Ferner ist im Frischluftpfad eine Kühleinrichtung zum Kühlen der Frischluft angeordnet. Des Weiteren ist im Frischluftpfad ein Tropfenabscheider zum Entfernen von Salz und Wasser aus der Frischluft angeordnet sein. Ferner ist im Frischluftpfad stromab des Tropfenabscheiders eine Heizeinrichtung zum Erwärmen der Frischluft angeordnet sein. Außerdem ist ein Wärmepumpenkreis vorgesehen, in den die Kühleinrichtung und die Heizeinrichtung derart eingebunden sind, dass die Frischluft in der Kühleinrichtung als Wärmequelle dient, während die Frischluft in der Heizeinrichtung als Wärmesenke dient. Auf diese Weise kann der Wärmepumpenkreis Wärme in der Kühleinrichtung der Frischluft entziehen und in der Heizeinrichtung der Frischluft zuführen.

Ein Tropfenabscheider ist im vorliegenden Zusammenhang jegliche Einrichtung, die gezielt zum Abscheiden von Tropfen aus einer Gas- bzw. Luftströmung ausgestaltet ist. Ein derartiger Tropfenabscheider charakterisiert sich insbesondere durch eine Abscheiderstruktur, die vom jeweiligen Gas bzw. von Luft durchströmbar ist. Eine solche Abscheiderstruktur kann einen signifikanten Durchströmungswiderstand besitzen. Beispielsweise kann die Abscheiderstruktur mehrere Kanäle enthalten, die sich von oben nach unten durch die Abscheiderstruktur erstrecken, um darin anfallende Tropfen zu sammeln und nach unten abzuleiten. Diese Kanäle können dabei jeweils ein Querschnittsprofil besitzen, das an der von der Gas- bzw. Luftströmung angeströmten Seite offen ist. An dieser offenen Seite können außen am jeweiligen Kanal außerdem Einströmkonturen ausgebildet sein, die zum Inneren des jeweiligen Kanals hin, also bis zur jeweiligen Öffnung hin konvergieren. Die einzelnen, anströmseitig offenen Kanäle wirken dabei wie Impaktoren, also wie Trägheitsabscheider.

Erfindungsgemäß ist vorgesehen, dass im Wärmepumpenkreis ein Arbeitsfluid zirkuliert, wobei die Kühleinrichtung und die Heizeinrichtung jeweils als Wärmetauscher ausgestaltet sind, in denen jeweils das Arbeitsfluid wärmeübertragend mit der Frischluft gekoppelt ist. Durch die Verwendung eines vorzugsweise flüssigen Arbeitsfluids lässt sich die Wärme im Wärmepumpenkreis mit hoher Effizienz von der Kühleinrichtung zur Heizeinrichtung transportieren. Mit Hilfe von Wärmetauschern lässt sich die Wärmeübertragung zwischen der Frischluft und dem jeweiligen Arbeitsfluid mediengetrennt mit hoher Effizienz realisieren.

Entsprechend einer Ausführungsform können die Kühleinrichtung und der Tropfenabscheider separate Einheiten sein, wobei der Tropfenabscheider dann stromab der Kühleinrichtung im Frischluftpfad angeordnet ist. Durch die separate Ausgestaltung von Kühleinrichtung und Tropfenabscheider lässt sich die jeweilige Funktion optimieren. Ferner ist es grundsätzlich möglich, eine herkömmliche Kühleinrichtung und einen herkömmlichen Tropfenabscheider zu verwenden.

Besonders vorteilhaft ist jedoch eine alternative Ausführungsform, bei welcher die Kühleinrichtung und der Tropfenabscheider in einer gemeinsamen Einheit integral ausgebildet sind. Eine derartige integrale Einheit baut besonders kompakt und besitzt dementsprechend einen reduzierten Raumbedarf. Ferner ist die thermische Isolation der integrierten Einheit leichter realisierbar als bei zwei separaten Einheiten.

Bei einer derartigen integrierten Einheit ergibt sich außerdem der Vorteil, dass auch die Kühleinrichtung durch die erhöhte Wassermenge eine selbstreinigende Wirkung für anfallende Salzablagerungen besitzt. Das anfallende Kondensat bewirkt in der Kühleinrichtung eine gewisse Entsalzungs- bzw. Ausspülwirkung.

Gemäß einer vorteilhaften Weiterbildung kann in der gemeinsamen Einheit wenigstens eine zum Abscheiden von Wassertropfen und Salzpartikeln dienende Abscheiderstruktur gekühlt sein. Auf diese Weise wird genau dort die Kälte erzeugt bzw. die Wärme entzogen, wo das Abscheiden von Wassertropfen und Salzpartikeln erfolgen soll. Hierdurch besitzt der Tropfenabscheider eine besonders hohe Effizienz. Zweckmäßig kann die Abscheiderstruktur vom Arbeitsfluid des Wärmepumpenkreises durchströmt sein. Besonders zweckmäßig ist eine Ausführungsform, bei welcher ein Wärmetauscher, der in der Kühleinrichtung das Arbeitsfluid wärmeübertragend mit der Frischluft koppelt, eine Wärmetauscherstruktur aufweist, die gleichzeitig als Abscheiderstruktur ausgestaltet ist. Die Wärmetauscherstruktur kann dann den vorstehend aufgezeigten Aufbau der Abscheiderstruktur des Tropfenabscheiders besitzen, also insbesondere einen gegenüber einer herkömmlichen Wärmetauscherstruktur erhöhten Durchströmungswiderstand besitzen. Vorteilhaft kann die Wärmetauscherstruktur auch die vorstehend skizzierten Kanäle aufweisen, die von oben nach unten führen und einen anströmseitig offenen Querschnitt besitzen können.

Erfindungsgemäß ist im Frischluftpfad stromab der Heizeinrichtung ein Staubfilter zum Entfernen von Salz und Staub aus der Frischluft angeordnet. Durch diese Maßnahme kann der Reinheitsgrad der dem Innenraum zugeführten Frischluft weiter verbessert werden, was den Schutz von Einrichtungen und Komponenten der Off-Shore-Anlage weiter verbessert. Bemerkenswert ist dabei, dass der Staubfilter stromab der Heizeinrichtung angeordnet ist, so dass im Staubfilter erwärmte Luft gefiltert wird. Da die erwärmte Luft eine sehr niedrige relative Feuchte besitzt, ist die Gefahr einer Befeuchtung des Staubfilters reduziert.

Gemäß einer anderen vorteilhaften Ausführungsform kann im Frischluftpfad stromab der Heizeinrichtung oder stromab des Staubfilters ein Gebläse zum Antreiben der Frischluft im Frischluftpfad angeordnet sein. Durch die gewählte Positionierung des Gebläses wird das Gebläse nur mit getrockneter und erwärmter Frischluft durchströmt, die außerdem staubfrei sein kann. Hierdurch ist die Gefahr einer Verschmutzung des Gebläses erheblich reduziert. Das Gebläse, das insbesondere elektrisch angetrieben sein kann, wird dazu benötigt, die Frischluft gegen die Strömungswiderstände der einzelnen durchströmbaren Komponenten der Frischluftversorgungseinrichtung anzutreiben.

Entsprechend einer anderen vorteilhaften Ausführungsform kann die Kühleinrichtung so ausgelegt sein, dass sie im Betrieb der Frischluftversorgungseinrichtung die Frischluft unter den Taupunkt von Wasser abkühlt. Durch diese Maßnahme wird die im Tropfenabscheider anfallende Wassermenge signifikant erhöht, was die Reinigungswirkung für die Frischluft, nämlich das Trocknen und Entsalzen erheblich verbessert. Insbesondere kann die Kühleinrichtung hierzu so ausgelegt sein, dass sie im Betrieb der Frischluftversorgungseinrichtung die Frischluft unter die aktuelle Umgebungstemperatur abkühlt.

Entsprechend einer anderen vorteilhaften Ausführungsform kann die Heizeinrichtung so ausgelegt sein, dass sie im Betrieb der Frischluftversorgungseinrichtung die Frischluft über den Taupunkt von Wasser erwärmt, wodurch die relative Feuchtigkeit der getrockneten Luft nochmals reduziert wird. Insbesondere kann die Heizeinrichtung so ausgelegt sein, dass sie im Betrieb der Frischluftversorgungseinrichtung die Frischluft über die aktuelle Umgebungstemperatur erwärmt.

Eine erfindungsgemäße Off-Shore-Anlage umfasst einen Innenraum sowie eine Frischluftversorgungseinrichtung der vorstehend beschriebenen Art. Dabei ist der Einlass der Frischluftversorgungseinrichtung zur Umgebung der Off-Shore-Anlage offen, während der Auslass der Frischluftversorgungseinrichtung zum Innenraum der Off-Shore-Anlage offen ist. Auf diese Weise gelangt entsalzte, getrocknete und erwärmte Frischluft in den Innenraum.

Bevorzugt handelt es sich bei der Off-Shore-Anlage um eine Windkraftanlage, deren Gondel den Innenraum enthält, in dem ein Generator der Windkraftanlage angeordnet ist. Auf diese Weise können insbesondere der Generator, die Schaltschränke und Umrichter, die Getriebe und die diversen Steuer und Regelorgane vor salzhaltiger und feuchter Luft geschützt werden. Alternativ kann es sich bei der Off-Shore-Anlage auch um ein Schiff oder um eine Bohrinsel handeln.

Die beschriebene Erfindung läßt sich darüber hinaus auch in anderen Bereichen mit feuchter und salzhaltiger Luft einsetzen. Zu nennen wären hier als Beispiel Schaltschränke für Funkmasten in Autobahnnähe oder im Küstenbereich (On-Shore).
Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,

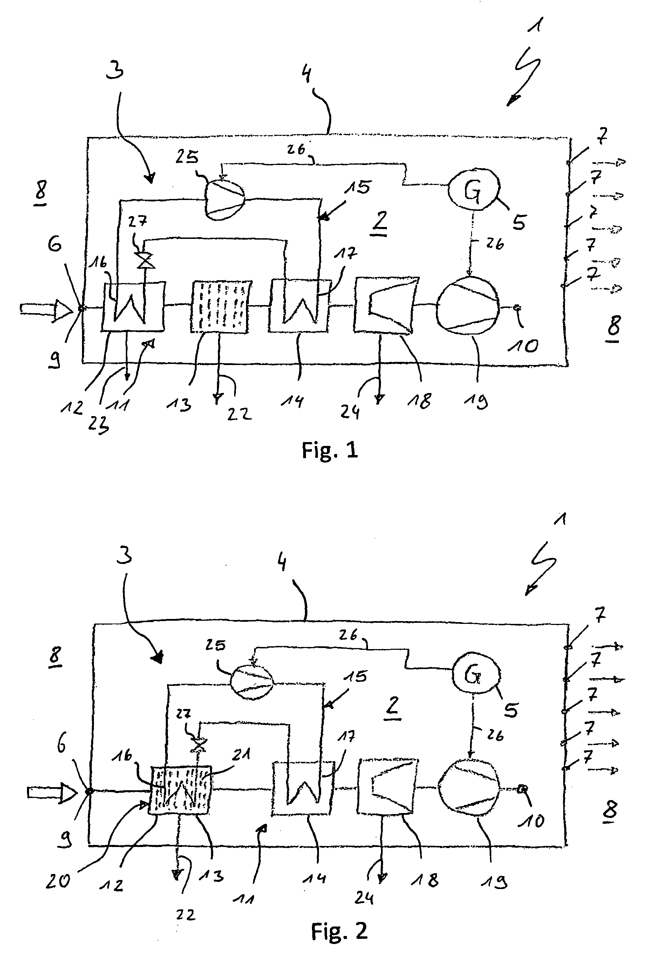

- Fig. 1 und 2: jeweils eine stark vereinfachte, schaltplanartige Prinzipdarstellung einer Off-Shore-Anlage, die mit einer Frischluftversorgungseinrichtung ausgestattet ist, bei verschiedenen Ausführungsformen.

Entsprechend den Figuren 1 und 2 umfasst eine Off-Shore-Anlage 1 einen Innenraum 2 sowie eine Frischluftversorgungseinrichtung 3. Bei einer bevorzugten OffShore-Anlage 1 handelt es sich um eine Windkraftanlage, wobei der Innenraum 2 dann in einer Gondel 4 der Windkraftanlage 1 angeordnet ist. In der Gondel 4 ist in diesem Innenraum 2 außerdem ein Generator 5 der Windkraftanlage 1 angeordnet.

Die Off-Shore-Anlage 1 bzw. die Gondel 4 der Windkraftanlage 1 besitzt in den Beispielen der Figuren 1 und 2 eine Einlassöffnung 6 und mehrere Auslassöffnungen 7. Ferner ist die Off-Shore-Anlage 1 bzw. die Gondel 4 einer Umgebung 8 ausgesetzt, zu der die Öffnungen 6, 7 offen sind.

Die Austrittsöffnungen 7 sind außerdem zum Innenraum 2 hin offen, so dass bei einem Überdruck im Innenraum 2 Luft vom Innenraum 2 in die Umgebung 8 entweichen kann. Mit der Luft kann überschüssige Wärme des Generators 5 in die Umgebung 8 emittiert werden.

Die Frischluftversorgungseinrichtung 3 umfasst einen Einlass 9 und einen Auslass 10. Der Einlass 9 ist an die Einlassöffnung 6 angeschlossen und somit zur Umgebung 8 hin offen. Der Auslass 10 ist dagegen zum Innenraum 2 hin offen.

Über den Einlass 9 kann somit salzhaltige und wasserhaltige Frischluft aus der Umgebung 8 angesaugt werden. Über den Auslass 10 kann entsalzte und getrocknete Frischluft in den Innenraum 2 abgegeben werden. Die Frischluftversorgungseinrichtung 3 umfasst ferner einen Frischluftpfad 11, der vom Einlass 9 zum Auslass 10 führt. Die Frischluftversorgungseinrichtung 3 ist außerdem mit einer Kühleinrichtung 12, einem Tropfenabscheider 13, einer Heizeinrichtung 14 und einem Wärmepumpenkreis 15 ausgestattet. Die Kühleinrichtung 12 ist im Frischluftpfad 11 angeordnet und dient zum Kühlen der Frischluft. Der Tropfenabscheider 13 ist ebenfalls im Frischluftpfad 11 angeordnet und dient zum Entfernen von Salz und Wasser aus der Frischluft. Die Heizeinrichtung 14 ist stromab des Tropfenabscheiders 13 im Frischluftpfad 11 angeordnet und dient zum Erwärmen der Frischluft. Der Wärmepumpenkreis 15 ermöglicht eine Wärmeübertragung zwischen der Kühleinrichtung 12 und der Heizeinrichtung 14. Hierzu sind die Kühleinrichtung 12 und die Heizeinrichtung 14 in den Wärmepumpenkreis 15 eingebunden, und zwar derart, dass die Frischluft in der Kühleinrichtung 12 als Wärmequelle dient, während die Frischluft in der Heizeinrichtung 14 als Wärmesenke dient. Mit anderen Worten, der Wärmepumpenkreis 15 entzieht der Frischluft in der Kühleinrichtung 12 Wärme und führt der Frischluft in der Heizeinrichtung 14 diese Wärme wieder zu. Hierzu zirkuliert im Wärmepumpenkreis 15 ein Arbeitsfluid, bei dem es sich bevorzugt um eine Flüssigkeit handelt. Die Kühleinrichtung 12 weist einen Wärmetauscher 16 auf oder ist als Wärmetauscher 16 ausgestaltet. Im Wärmetauscher 16 ist das Arbeitsfluid mit der Frischluft wärmeübertragend gekoppelt. Die Heizeinrichtung 14 weist ebenfalls einen Wärmetauscher 17 auf oder ist als Wärmetauscher 17 ausgestaltet. Auch in diesem Wärmetauscher 17 ist das Arbeitsfluid mit der Frischluft wärmeübertragend gekoppelt.

Die Frischluftversorgungseinrichtung 3 ist bei den hier gezeigten Ausführungsformen außerdem mit einem Staubfilter 18 ausgestattet, der stromab der Heizeinrichtung 14 im Frischluftpfad 11 angeordnet ist und zum Entfernen von Salz und Staub aus der Frischluft dient. Des Weiteren ist hier im Frischluftpfad 11 ein Gebläse 19 angeordnet, das stromab der Heizeinrichtung 14 angeordnet ist und zum Antreiben der Frischluft im Frischluftpfad 11 dient. Sofern wie hier ein Staubfilter 18 vorgesehen ist, befindet sich das Gebläse 19 zweckmäßig stromab des Staubfilters 18 im Frischluftpfad 11. Das Gebläse 19 führt zum Auslass 10.

Bei der in Figur 1 gezeigten Ausführungsform sind die Kühlereinrichtung 12 und der Tropfenabscheider 13 separate Einheiten. In diesem Fall ist der Tropfenabscheider 13 stromab der Kühleinrichtung 12 im Frischluftpfad angeordnet. Somit befindet sich der Tropfenabscheider 13 zwischen der Kühleinrichtung 12 und der Heizeinrichtung 14.

Im Unterschied dazu zeigt Figur 2 eine Ausführungsform, bei welcher die Kühleinrichtung 12 und der Tropfenabscheider 13 in einer gemeinsamen Einheit 20 integral ausgebildet sind. In dieser Einheit 20 kann eine Abscheiderstruktur 21 vorhanden sein, die zum Abscheiden von Wassertropfen und Salzpartikeln dient. Zweckmäßig kann nun die Integration von Kühleinrichtung 12 und Tropfenabscheider 13 innerhalb der Einheit 20 so realisiert sein, dass diese Abscheiderstruktur 21 gekühlt ist. Beispielsweise kann die Abscheiderstruktur 21 hierzu vom Arbeitsfluid des Wärmepumpenkreises 15 durchströmt sein und zumindest einen Teil des Wärmetauschers 16 bilden.

Die hier vorgestellte Frischluftversorgungseinrichtung 3 kann optional außerdem mit einem hier nicht gezeigten Vorabscheider ausgestattet sein, der im Frischluftpfad 11 stromauf der Kühleinrichtung 12 angeordnet ist. Der Vorabscheider kann insbesondere dazu dienen, bei Gischt, Regen oder Schneefall, Tropfen oder Schnee aus der angesaugten Luft abzuscheiden. Insbesondere kann der Einlass 9 als ein derartiger Vorabscheider ausgestaltet sein.

Die hier vorgestellte Frischluftversorgungseinrichtung 3 arbeitet wie folgt:
Die aus der Umgebung 8 angesaugte Frischluft kann - je nach Witterung - einen vergleichsweise hohen Salzgehalt und Wassergehalt aufweisen. Diese Frischluft wird aus der Umgebung 8 über den Einlass 9 mit Hilfe des Gebläses 19 in den Frischluftpfad 11 angesaugt. In der Kühleinrichtung 12 erfolgt zunächst eine Abkühlung der Frischluft. Durch die Kühlung wird die relative Feuchte der Frischluft erhöht, wodurch im Tropfenabscheider 13 eine verbesserte Tropfenabscheidung realisierbar ist. Besonders zweckmäßig ist dabei eine Ausführungsform, bei welcher die Kühleinrichtung 12 so ausgelegt ist, dass sie im Betrieb der Frischluftversorgungseinrichtung 3 die Frischluft unter den Taupunkt von Wasser abkühlt. Hierdurch kommt es in der Kühleinrichtung 12 zu einer Kondensation. Hierdurch wird die Effizienz der Tropfenabscheidung nochmals gesteigert. Im Tropfenabscheider 13 können gleichzeitig auch Salzkristalle ausgeschieden werden. Durch die Kühlung der Frischluft und durch die Kondensation des Wassers wird die Kristallbildung unterstützt, so dass im Tropfenabscheider 13 eine verbesserte Kristallabscheidung realisierbar ist. Das Abführen von Wasser und Salz aus der Frischluft im Tropfenabscheider 13 ist durch einen Pfeil 22 angedeutet. Durch den vergleichsweise hohen Wasseranteil ist die Gefahr einer unzulässig hohen Salzanreicherung im Tropfenabscheider 13 reduziert.

Bei der in Figur 1 gezeigten Ausführungsform ist durch einen Pfeil 23 eine Kondensatabführung aus der separaten Kühleinrichtung 12 angedeutet. Auch in der Kühleinrichtung 12 kann durch den hohen Kondensatanfall die Gefahr einer unzulässigen Salzanreicherung reduziert werden.

Nach dem Trocknen und Entsalzen der Frischluft wird diese in der Heizeinrichtung 14 erwärmt, vorzugsweise über den Taupunkt und weiter vorzugsweise auch über die Umgebungstemperatur. Durch diese Maßnahme kann die relative Restfeuchte der Frischluft nochmals reduziert werden. Bemerkenswert ist, dass mit Hilfe des Wärmepumpenkreises 15 die zum Erwärmen der Frischluft benötigte Wärme dadurch gewonnen wird, dass die zum Abkühlen der Frischluft in der Kühleinrichtung 12 über das Arbeitsfluid entzogen und der Heizeinrichtung 14 zugeführt wird. Somit besitzt die hier vorgestellte Frischluftversorgungseinrichtung 3 einen vergleichsweise geringen Energiebedarf.

Die getrocknete und erwärmte Frischluft wird anschließend durch den Staubfilter 18 geführt, in dem kleinere Salzkristalle sowie Staub aus der Luft abgeschieden werden. Eine entsprechende Abscheidung ist in den Figuren 1 und 2 durch einen Pfeil 24 angedeutet.

Anschließend gelangt die getrocknete, entstaubte und entsalzte sowie erwärmte Luft zum Gebläse 19, das die Luft über den Auslass 10 in den Innenraum 2 abgibt. Hierdurch wird der Innenraum 2 mit trockener und nahezu salzfreier Luft versorgt, wodurch die Korrosionsgefahr von Einrichtungen und Komponenten der Off-Shore-Anlage 1 erheblich reduziert ist. Insbesondere kann die Korrosionsgefahr im Generator 5 reduziert werden, sofern es sich bei der Off-Shore-Anlage 1 um eine Windkraftanlage handelt. Mit Hilfe des Generators 5 können beispielsweise die Stromverbraucher der Frischluftversorgungseinrichtung 3 mit elektrischer Energie versorgt werden. Im Beispiel sind dies das Gebläse 19 und eine Pumpe 25 des Wärmepumpenkreises 15, der im Wärmepumpenkreis 15 das Arbeitsfluid antreibt.

In den Figuren 1 und 2 sind Stromversorgungsleitungen mit 26 bezeichnet, über welche der Generator 5 das Gebläse 19 und die Pumpe 25 mit Strom versorgt. Ferner ist ein Ventil mit 27 bezeichnet, das im Wärmepumpenkreis angeordnet ist und zum Steuern des Drucks im Arbeitsfluid und/oder zum Sperren des Wärmepumpenkreises 15 verwendet werden kann.

Durch das Fördern der Frischluft mit Hilfe der Frischluftversorgungseinrichtung 3 in den Innenraum 2 entsteht im Innenraum 2 ein Überdruck, der über die Auslassöffnungen 7 in die Umgebung 8 entspannt wird. Gleichzeitig kann dadurch überschüssige Wärme, die im Innenraum 2 beispielsweise durch den Generator 5 entsteht, in die Umgebung 8 abgeführt werden.

## Patentansprüche

1. Off-Shore-Anlage, umfassend einen Innenraum (2) und eine Frischluftversorgungseinrichtung (3) mit
- einem Einlass (9) für salzhaltige und wasserhaltige Frischluft,
- einem Auslass (10) für entsalzte und getrocknete Frischluft,
- einem Frischluftpfad (11), der vom Einlass (9) zum Auslass (10) führt,
- wobei der Einlass (9) der Frischluftversorgungseinrichtung (3) zur Umgebung (8) der Off-Shore-Anlage (1) offen ist, während der Auslass (10) der Frischluftversorgungseinrichtung (3) zum Innenraum (2) der Off-Shore-Anlage (1) offen ist,
**gekennzeichnet durch**
- eine im Frischluftpfad (11) angeordnete Kühleinrichtung (12) zum Kühlen der Frischluft,
- einen im Frischluftpfad (11) angeordneten Tropfenabscheider (13) zum Entfernen von Salz und Wasser aus der Frischluft,
- eine im Frischluftpfad (11) stromab des Tropfenabscheiders (13) angeordnete Heizeinrichtung (14) zum Erwärmen der Frischluft,
- einen Wärmepumpenkreis (15), in den die Kühleinrichtung (12) und die Heizeinrichtung (14) eingebunden sind, derart, dass die Frischluft in der Kühleinrichtung (12) als Wärmequelle dient und die Frischluft in der Heizeinrichtung (14) als Wärmesenke dient,
- ein im Frischluftpfad (11) stromab der Heizeinrichtung (14) angeordnetes Staubfilter (18) zum Entfernen von Salz und Staub aus der Frischluft.

2. Anlage nach Anspruch 1,
**dadurch gekennzeichnet,**
- **dass** im Wärmepumpenkreis (15) ein Arbeitsfluid zirkuliert,
- **dass** die Kühleinrichtung (12) einen Wärmetauscher (16) aufweist oder als Wärmetauscher (16) ausgestaltet ist, in dem das Arbeitsfluid wärmeübertragend mit der Frischluft gekoppelt ist,
- **dass** die Heizeinrichtung (14) einen Wärmetauscher (17) aufweist oder als Wärmetauscher (17) ausgestaltet ist, in dem das Arbeitsfluid wärmeübertragend mit der Frischluft gekoppelt ist.

3. Anlage nach Anspruch 1 oder 2,
**dadurch gekennzeichnet,**
**dass** die Kühleinrichtung (12) und der Tropfenabscheider (13) separate Einheiten sind, wobei der Tropfenabscheider (13) stromab der Kühleinrichtung (12) im Frischluftpfad (11) angeordnet ist.

4. Anlage nach Anspruch 1 oder 2,
**dadurch gekennzeichnet,**
**dass** die Kühleinrichtung (12) und der Tropfenabscheider (13) in einer gemeinsamen Einheit (20) integral ausgebildet sind.

5. Anlage nach Anspruch 4,
**dadurch gekennzeichnet,**
**dass** in der gemeinsamen Einheit (20) wenigstens eine zum Abscheiden von Wassertropfen und Salzpartikeln dienende Abscheiderstruktur (21) gekühlt ist.

6. Anlage nach einem der Ansprüche 1 bis 5,
**dadurch gekennzeichnet,**
**dass** der Tropfenabscheider (13) eine Abscheiderstruktur (21) aufweist, die mehrere von oben nach unten führende Kanäle aufweist, die darin anfallende Flüssigkeit nach unten abführen.

7. Anlage nach Anspruch 6,
**dadurch gekennzeichnet,**
**dass** die Kanäle der Abscheiderstruktur (21) an einer von der Frischluft angeströmten Seite offen sind.

8. Anlage nach Anspruch 7,
**dadurch gekennzeichnet,**
**dass** der jeweilige Kanal an seiner offenen Seite Einströmkonturen aufweist, die in der Strömungsrichtung der Frischluft konvergieren.

9. Anlage nach einem der Ansprüche 1 bis 8,
**dadurch gekennzeichnet,**
**dass** im Frischluftpfad (11) stromab der Heizeinrichtung (14) oder stromab des Staubfilters (18) ein Gebläse (19) zum Antreiben der Frischluft im Frischluftpfad (11) angeordnet ist.

10. Anlage nach einem der Ansprüche 1 bis 9,
**dadurch gekennzeichnet,**
**dass** die Kühleinrichtung (12) so ausgelegt ist, dass sie im Betrieb der Frischluftversorgungseinrichtung (3) die Frischluft unter den Taupunkt von Wasser abkühlt.

11. Anlage nach einem der Ansprüche 1 bis 10,
**dadurch gekennzeichnet,**
**dass** die Heizeinrichtung (14) so ausgelegt ist, dass sie im Betrieb der Frischluftversorgungseinrichtung (3) die Frischluft über den Taupunkt von Wasser und/oder über Umgebungstemperatur erwärmt.

12. Anlage nach einem der Ansprüche 1 bis 11,
**dadurch gekennzeichnet,**
**dass** die Off-Shore-Anlage eine Windkraftanlage (1) ist, deren Gondel (4) den Innenraum (2) enthält, in dem ein Generator (5) der Windkraftanlage (1) angeordnet ist.

13. Verfahren zur Frischluftversorgung einer Off-Shore-Anlage (1) nach einem der Ansprüche 1 bis 12,
- bei dem die Frischluft zum Entfernen von Salz und Wasser abgekühlt wird,
- bei dem die Frischluft nach dem Entsalzen und Trocknen erwärmt wird,
- wobei die zum Erwärmen der Frischluft benötigte Wärme der Frischluft mittels eines Wärmepumpenkreises (15) beim Kühlen der Frischluft entzogen wird.

## Claims

1. Offshore facility, comprising an inner space (2) and a fresh air supply device (3), having
- an inlet (9) for salt- and water-containing fresh air,
- an outlet (10) for desalinated and dried fresh air,
- a fresh air path (11) leading from the inlet (9) to the outlet (10),
- wherein the inlet (9) of the fresh air supply device (3) is open to the surroundings (8) of the offshore facility (1), and the outlet (10) of the fresh air supply device (3) is open to the inner space (2) of the offshore facility (1),
**characterized by**
- a cooling device (12), arranged in the fresh air path (11), for cooling the fresh air,
- a drop separator (13), arranged in the fresh air path (11), for removing salt and water from the fresh air,
- a heating device (14), arranged in the fresh air path (11) downstream of the drop separator (13), for heating the fresh air,
- a heat pump cycle (15), the cooling device (12) and the heating device (14) being integrated in the heat pump cycle (15) such that the fresh air in the cooling device (12) is used as a heat source and the fresh air in the heating device (14) is used as a heat sink,
- a dust filter (18), arranged in the fresh air path (11) downstream of the heating device (14), for removing salt and dust from the fresh air.

2. Facility according to claim 1,
**characterized in that**
- a working fluid circulates in the heat pump cycle (15),
- the cooling device (12) comprises a heat exchanger (16) or is configured as a heat exchanger (16) in which the working fluid is coupled with the fresh air in a heat transferring relationship,
- the heating device (14) comprises a heat exchanger (17) or is configured as a heat exchanger (17) in which the working fluid is coupled with the fresh air in a heat transferring relationship.

3. Facility according to claim 1 or 2,
**characterized in that**
the cooling device (12) and the drop separator (13) are separate units, wherein the drop separator (13) is arranged downstream of the cooling device (12) in the fresh air path (11).

4. Facility according to claim 1 or 2,
**characterized in that**
the cooling device (12) and the drop separator (13) are formed integrally in a common unit (20).

5. Facility according to claim 4,
**characterized in that**
at least one separating structure (21), for separating water drops and salt particles, is arranged to be cooled in the common unit (20).

6. Facility according to any of claims 1 to 5,
**characterized in that**
the drop separator (13) comprises a separating structure (21) having several channels leading from a top to a bottom, the channels discharging any fluid present therein at the bottom.

7. Facility according to claim 6,
**characterized in that**
the channels of the separating structure (21) are open at the fresh air stream side.

8. Facility according to claim 7,
**characterized in that**
each channel comprises inlet contours on the open side thereof which converge in a flow direction of the fresh air.

9. Facility according to any of claims 1 to 8,
**characterized in that**
a fan (19), for driving the fresh air in the fresh air path (11), is arranged in the fresh air path (11) downstream of the heating device (14) or downstream of the dust filter (18).

10. Facility according to any of claims 1 to 9,
**characterized in that**
the cooling device (12) is configured such that, during operation of the fresh air supply device (3), it cools the fresh air below the condensation point of water.

11. Facility according to any of claims 1 to 10,
**characterized in that**
the heating device (14) is configured such that, during operation of the fresh air supply device (3), it heats the fresh air above the condensation point of water and/or above ambient temperature.

12. Facility according to any of claims 1 to 11,
**characterized in that**
the offshore facility is a wind turbine (1), wherein its nacelle (4) comprises the inner space (2) in which a generator (5) of the offshore facility (1) is positioned.

13. Method for supplying fresh air to an offshore facility (1) according to any of claims 1 to 12, wherein
- the fresh air is cooled for removing salt and water,
- the fresh air is heated after desalination and drying,
- wherein the heat required for heating the fresh air is extracted via a heat pump cycle (15) during cooling of the fresh air.

## Revendications

1. Installation en mer, comprenant un espace intérieur (2) et un système d'alimentation en air frais (3) pourvu
- d'une entrée (9) pour de l'air frais contenant du sel et contenant de l'eau,
- d'une sortie (10) pour l'air frais dessalé et séché,
- d'un chemin d'air frais (11), qui mène de l'entrée (9) à la sortie (10),
- dans laquelle l'entrée (9) du système d'alimentation en air frais (3) est ouverte vers l'extérieur (8) de l'installation en mer (1), tandis que la sortie (10) du système d'alimentation en air frais (3) est ouverte en direction de l'espace intérieur (2) de l'installation en mer (1), **caractérisée par**
- un système de refroidissement (12) disposé dans le chemin d'air frais (11), servant à refroidir l'air frais,
- un séparateur de gouttes (13) disposé dans le chemin d'air frais (11), servant à éliminer de l'air frais le sel et l'eau,
- un système de chauffage (14) disposé dans le chemin d'air frais (11) en aval du séparateur de gouttes (13), servant à réchauffer l'air frais,
- un circuit de pompe à chaleur (15), dans lequel le système de refroidissement (12) et le système de chauffage (14) sont intégrés de telle manière que l'air frais fait office de source de chaleur dans le système de refroidissement (12) et que l'air frais fait office de dissipateur de chaleur dans le système de chauffage (14),
- un filtre à poussières (18) disposé dans le chemin d'air frais (11) en aval du système de chauffage (14), servant à éliminer de l'air frais le sel et les poussières.

2. Installation selon la revendication 1,
**caractérisée en ce**
- **qu'**un fluide de travail circule dans le circuit de pompe à chaleur (15),
- **que** le système de refroidissement (12) présente un échangeur de chaleur (16) ou est configuré sous la forme d'un échangeur de chaleur (16), dans lequel le fluide de travail est couplé à l'air d'air de manière à transférer la chaleur,
- **que** le système de chauffage (14) présente un échangeur à chaleur (17) ou est configuré sous la forme d'un échangeur à chaleur (17), dans lequel le fluide de travail est couplé à l'air frais de manière à transférer la chaleur.

3. Installation selon la revendication 1 ou 2,
**caractérisée en ce**
**que** le système de refroidissement (12) et le séparateur de gouttes (13) sont des unités séparées, dans laquelle le séparateur de gouttes (13) est disposé en aval du système de refroidissement (12) dans le chemin d'air frais (11).

4. Installation selon la revendication 1 ou 2,
**caractérisée en ce**
**que** le système de refroidissement (12) et le séparateur de gouttes (13) sont réalisés de manière intégrale dans une unité (20) commune.

5. Installation selon la revendication 4,
**caractérisée en ce**
**qu'**au moins une structure de séparation (21) servant à séparer des gouttes d'eau et des particules de sel est refroidie dans l'unité (20) commune.

6. Installation selon l'une quelconque des revendications 1 à 5,
**caractérisée en ce**
**que** le séparateur de gouttes (13) présente une structure de séparation (21), qui présente plusieurs canaux menant du bas vers le haut, lesquels évacuent vers le bas le liquide produit.

7. Installation selon la revendication 6,
**caractérisée en ce**
**que** les canaux de la structure de séparation (21) sont ouverts au niveau d'un côté balayé par le flux d'air.

8. Installation selon la revendication 7,
**caractérisée en ce**
**que** le canal respectif présente, au niveau de son côté ouvert, des contours de flux entrant, qui convergent dans le sens d'écoulement de l'air frais.

9. Installation selon l'une quelconque des revendications 1 à 8,
**caractérisée en ce**
**qu'**une soufflante (19) servant à entraîner l'air frais dans le chemin d'air frais (11) est disposée dans le chemin d'air frais (11) en aval du système de chauffage (14) ou en aval du filtre à poussières (18).

10. Installation selon l'une quelconque des revendications 1 à 9,
**caractérisée en ce**
**que** le système de refroidissement (12) est configuré de telle manière qu'il refroidit, lorsque le système d'alimentation en air frais (3) fonctionne, l'air frais sous le point de rosée de l'eau.

11. Installation selon l'une quelconque des revendications 1 à 10,
**caractérisée en ce**
**que** le système de chauffage (14) est configuré de telle sorte qu'il réchauffe, lorsque le système d'alimentation en air frais (3) fonctionne, l'air frais au-dessus du point de rosée de l'eau et/ou au-dessus de la température extérieure.

12. Installation selon l'une quelconque des revendications 1 à 11,
**caractérisée en ce**
**que** l'installation en mer est une éolienne (1), dont la nacelle (4) contient l'espace intérieur (2), dans laquelle une génératrice (5) de l'éolienne (1) est disposée.

13. Procédé servant à alimenter en air frais une installation en mer (1) selon l'une quelconque des revendications précédentes 1 à 12, où
- l'air frais est refroidi afin d'éliminer le sel et l'eau,
- l'air frais est réchauffé après le dessalage et le séchage,
- dans lequel la chaleur requise afin de réchauffer l'air frais est extraite de l'air frais au moyen d'un circuit de pompe à chaleur (15) lors du refroidissement de l'air frais.
